## Europäisches Patentamt
## European Patent Office
## Office européen des brevets

(19)

(11) Numéro de publication: **0 173 595 B1**

(12)

# FASCICULE DE BREVET EUROPEEN

(45) Date de publication du fascicule du brevet:
**17.11.88**

(51) Int. Cl.⁴: **H 02 P 5/172,** H 02 M 7/162

(21) Numéro de dépôt: **85401335.6**

(22) Date de dépôt: **02.07.85**

(54) Procédé et dispositif pour l'élaboration d'un signal de synchronisation à partir des tensions de phase d'un réseau.

(30) Priorité: **03.08.84 FR 8412320**

(43) Date de publication de la demande:
**05.03.86 Bulletin 86/10**

(45) Mention de la délivrance du brevet:
**17.11.88 Bulletin 88/46**

(84) Etats contractants désignés:
**DE GB IT SE**

(56) Documents cités:
**EP - A - 0 082 558**
**DE - B - 2 524 869**
**US - A - 3 671 836**
**US - A - 4 263 557**

**ELEKTRONIK, vol. 32, no. 18, septembre 1983, pages 119-122; W. KONHÄUSER: "Mikrocomputer steuert Thyristoren"**
**IEEE TRANSACTIONS ON INDUSTRIAL ELECTRONICS, vol. IE-30, no. 4, novembre 1983, pages 330-333, IEEE, New York, US; G.H. PFITSCHER: "A microprocessor-based synchronization scheme for digitally controlled three-phase thyristor power converters"**

(73) Titulaire: **LA TELEMECANIQUE ELECTRIQUE, 33 bis, avenue du Maréchal Joffre, F-92000 Nanterre (FR)**

(72) Inventeur: **Parisel, Jacques, Résidence "La Grille ROYALE" Mesnil Le Roi, F-78600 Maisons Laffitte (FR)**
Inventeur: **Fauvet, Jean-Pierre, 63, rue Cramail, F-92500 Rueil Malmaison (FR)**

(74) Mandataire: **Marquer, Francis et al, CABINET MOUTARD 35, avenue Victor Hugo Résidence Champfleury, F-78180 Voisins-le-Bretonneux (FR)**

## Description

La présente invention concerne un procédé et un dispositif pour l'élaboration, à partir de tensions alternatives d'un réseau polyphasé, d'un signal d'horloge utilisable pour ordonner, en synchronisme avec lesdites tensions, le séquencement d'opérations effectuées par un système notamment numérique.

Elle s'applique plus particulièrement, mais non exclusivement, à l'élaboration du signal de synchronisation pour la commande numérique, par microprocesseur, d'un variateur électronique de vitesse pour moteur à courant continu utilisant un montage redresseur à valves commandables, par exemple, un pont de puissance à thyristors, du type montage de Graetz, alimenté par un courant polyphasé.

On sait que dans un variateur à courant triphasé de ce genre, le montage redresseur se compose habituellement d'un pont constitué par trois paires de thyristors montés de la façon suivante:

Les deux thyristors de chacune des paires sont montés en série dans un même sens.

Le point de jonction des deux thyristors d'une même paire est relié à une phase correspondante du réseau triphasé.

Les deux extrémités libres des thyristors d'une même paire sont respectivement raccordées aux deux bornes d'alimentation du moteur.

Ce redresseur doit en outre comprendre un circuit permettant d'effectuer l'allumage successif de couples de thyristors du pont en synchronisme avec les passages à zéro des tensions composées du réseau, mais avec un certain déphasage $\Phi$.

Le réglage de la tension de sortie de ce redresseur est alors obtenu en faisant varier ce déphasage $\Phi$.

Il est clair qu'en vue d'effectuer une commande de la commutation des différents couples de thyristors, il convient de déterminer avec précision les instants où les tensions de phase du réseau passent à zéro en les distinguant les unes par rapport aux autres et de déterminer éventuellement, en fonction de la tension demandée, l'angle de déphasage $\Phi$ avec lequel, à partir de cet instant, la commutation devra s'effectuer.

Il convient de noter à ce sujet que l'idée d'utiliser la tension alternative du réseau en vue d'engendrer un signal de synchronisation pouvant servir à la commande de la commutation d'un pont de thyristors n'est pas nouvelle. Il est en effet facilement envisageable de produire un tel signal de synchronisation à partir de la détection des passages à zéro (ou même, à une valeur déterminée) des tensions de phase du réseau. Toutefois, les systèmes utilisés sont volumineux et onéreux, parce qu'ils font nécessairement intervenir un transformateur triphasé à enroulements complexes (enroulement direct et enroulement inverse).

Tel est notamment le cas du dispositif décrit dans l'article inclus dans les pages 330–333 de la publication IEEE TRANSACTIONS ON INDUS-TRIAL ELECTRONICS, vol. IE-30, no. 4, novembre 1983, selon lequel le signal de synchronisation qui définit les périodes de conduction du pont redresseur de tension, est obtenu par un multiplexage des tensions de phase du réseau, par exemple avec une période de $\pi/3$ radians, et ce, à la suite d'une phase transitoire dans laquelle les trois tensions de phase sont échantillonnées jusqu'au premier passage à zéro d'une tension de phase par exemple avec une période d'échantillonnage de 39 $\mu$ s.

L'invention propose donc, en vue d'éviter ces inconvénients, un procédé d'élaboration d'un signal de synchronisation, à partir de la tension alternative du réseau qui ne fait intervenir que des composants simples et, en particulier, des transformateurs monophasés pouvant consister en ceux utilisés dans le circuit d'alimentation.

Ce procédé fait nécessairement intervenir un système numérique, par exemple à microprocesseur, qui peut avantageusement consister en celui qui utilise le signal de synchronisation par exemple en vue d'effectuer la commande asservie des thyristors d'un pont redresseur tel que celui précédemment décrit.

D'une façon plus précise, le procédé selon l'invention comprend deux phases successives, à savoir:
- une phase d'initialisation comprenant:

- la mesure et/ou la vérification de la période du réseau par au moins un comptage du temps entre deux passages à zéro, avec un même front, d'une première tension de phase du réseau,
- la détermination du sens de rotation des tensions de phase du réseau d'après les signes des autres tensions de phase du réseau, au moment du passage à zéro avec le même front de ladite première tension de phase du réseau,
- l'élaboration d'un processus incrémental permettant de prévoir en fonction de ladite période et dudit sens les instants de passage à zéro, et le sens des fronts montants et descendants des différentes phases du réseau lors de ces passages à zéro, et
- une phase de fonctionnement comprenant:

- le multiplexage des tensions de phase du réseau suivant le sens de rotation des phases déterminé au cours de la phase d'évaluation, au rythme des instants de passage à zéro théoriques évalués par ledit processus incrémental, de manière à obtenir une tension formée par des portions successives des tensions de phase du réseau, l'aiguillage d'un arc de sinusoïde d'une tension de phase étant consécutif au passage à zéro théorique de l'arc de sinusoïde de la tension de phase précédente,
- la conformation du signal produit par le multiplexage en un premier signal d'ondes carrées dont les fronts indiquent les instants réels de passage à zéro des tensions de phase du réseau,
- la comparaison logique de ce premier signal d'ondes carrées avec un signal d'ondes carrées théorique obtenu à partir des paramètres mesurés lors de la phase d'initialisation dont les fronts correspondent à des instants légèrement décalés par rapport aux instants théoriques de passage à zéro des tensions de phase du réseau, cette comparaison permettant d'élaborer un premier signal crénelé,

– la comparaison logique de ce premier signal crénelé à un signal de fenêtre de largeur predeterminée pendant lequel les phases devraient théoriquement passer à zéro, et l'obtention, grâce au résultat de cette comparaison logique, d'un second signal crénelé,

– l'élaboration du signal de synchronisation par détection des fronts dudit deuxième signal crénelé.

Il convient de noter que le choix du type de front utilisé pour l'élaboration du signal de synchronisation est lié à la technologie des composants, par exemple du microprocesseur, utilisés.

Ainsi, par exemple, d'une façon analogue, l'élaboration du deuxième signal crénelé pourrait tout aussi bien s'effectuer par inversion des fronts descendants du premier signal crénelé. Dans ce cas, le signal de synchronisation pourrait être obtenu par détection des fronts montants de ce deuxième signal crénelé.

L'invention a également pour but de réduire, dans le signal de synchronisation obtenu conformément au procédé précédemment défini, l'influence des perturbations qui pourraient survenir aussi bien du réseau que du circuit électronique utilisé.

A cet effet, elle propose tout d'abord d'utiliser, pour conformer le signal produit par le multiplexage, une bascule à hystérésis qui ne change d'état que lorsque la tension de phase aiguillée par le multiplexeur change de signe. Cette disposition permet notamment d'éviter la prise en compte de toute perturbation n'entraînant pas un changement de signe de la tension de phase considérée du réseau.

En outre, elle prévoit, dans le procédé précédemment décrit, l'habilitation préalable des fronts du deuxième signal crénelé qui sont utilisés pour produire le signal de synchronisation, cette habilitation étant effectuée par ouverture d'une porte (ou fenêtre) au voisinage des instants de passage à zéro des tensions de phase du réseau, déterminés par le susdit processus incrémental.

Par ailleurs, l'invention concerne également un dispositif pour la mise en œuvre du procédé précédemment défini, ce dispositif étant caractérisé en ce qu'il comprend:

– un processeur comprenant des moyens de comptage permettant de mesurer et de mettre en mémoire le temps entre deux passages à zéro d'une tension de phase du réseau, des moyens pour déterminer, à l'aide d'une table de vérité, le sens de rotation des tensions de phase du réseau à l'instant du passage à zéro de l'une des tensions de phase, d'après le signe des autres tensions de phase du réseau, des moyens permettant par un processus incrémental, d'évaluer en fonction de ladite période et dudit sens de rotation, les instants de passage à zéro, et le sens des fronts montants et descendants des différentes tensions de phase du réseau, lors de ces passages à zéro,

– un circuit relié aux conducteurs de phase du réseau et permettant de fournir au processeur un signal numérique représentatif du passage à zéro de l'une des tensions de phase ainsi qu'un signal numérique représentatif du signe de ces tensions de phase,

– un multiplexeur comprenant au moins trois entrées parallèles respectivement reliées aux trois conducteurs de phase du réseau, au moins deux bornes de commande recevant un signal numérique élaboré par le processeur en fonction des instants de passage à zéro et du sens de rotation des tensions de phase déterminé par ledit processeur, et une sortie délivrant une tension formée par des portions successives des tensions de phase composées du réseau, l'aiguillage d'un arc de sinusoïde d'une tension de phase étant consécutif au passage à zéro théorique, évalué par le processeur, de l'arc de sinusoïde de la tension de phase précédente,

– une bascule reliée à la sortie du multiplexeur, cette bascule ne passant de l'état 1 à l'état 0 que lorsque la tension de phase aiguillée par le multiplexeur change de signe,

– un circuit logique de type «OU EXCLUSIF» connecté par l'une de ses entrées à la sortie de la bascule et par son autre entrée à une sortie du processeur délivrant une succession de créneaux positifs élaborés en fonction des paramètres mesurés lors de la phase d'initialisation et présentant des fronts légèrement décalés par rapport aux moments théoriques de passage à zéro des tensions de phase du réseau, et

– un circuit logique de type «NON ET» dont une entrée est connectée à la sortie du circuit logique de type «OU EXCLUSIF» et dont l'autre entrée reçoit un signal élaboré par le processeur en fonction des paramètres mesurés pendant la phase d'initialisation et formé d'une succession de créneaux constituant des fenêtres de validation et émis au voisinage des instants théoriques de passage à zéro des tensions de phase du réseau.

Des modes d'exécution de l'invention seront décrits ci-après, à titre d'exemples non limitatifs, avec référence aux dessins annexés dans lesquels:

La figure 1 est une représentation schématique partielle d'un variateur de vitesse pour moteur à courant continu utilisant un microprocesseur.

Les figures 2a à 2c sont des diagrammes représentatifs des courbes de tension de phase du réseau alimentant le variateur de vitesse représenté figure 1.

Les figures 2d à 2g sont des diagrammes représentant les signaux de sortie des différents étages du dispositif servant à l'élaboration, à partir des tensions du réseau, du signal de synchronisation utilisé par le microprocesseur.

Les figures 3a à 3c sont des diagrammes permettant d'illustrer le fonctionnement de la fenêtre de validation utilisée pour la détermination des instants de synchronisation

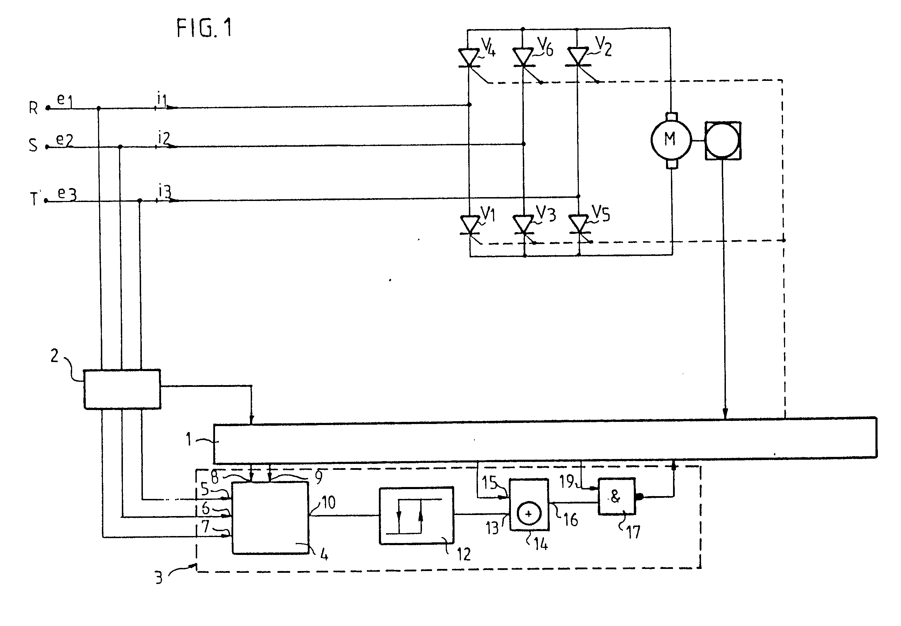

Le variateur de vitesse représenté sur la figure 1 est alimenté par le courant alternatif d'un réseau triphasé dont les trois conducteurs de phase RST présentent des tensions de phase $e_1$, $e_2$, $e_3$ et sont parcourus par des courants $i_1$, $i_2$, $i_3$.

Ce variateur de vitesse comprend un pont de puissance à thyristors du type montage de Graetz, constitué par trois paires de thyristors $V_1$ – $V_4$, $V_3$ – $V_6$, $V_5$ – $V_2$. La sortie de ce pont de puissance est connectée à un moteur à courant continu M.

Le principe d'un montage de Graetz est bien connu et ne sera, par conséquent, pas décrit en détail. Il convient cependant de rappeler que la tension aux bornes du réseau triphasé se décompose en six tensions composées $(e_1 – e_3)$, $(e_2 – e_3)$, $(e_2 – e_1)$, $(e_3 – e_1)$, $(e_3 – e_2)$ et $(e_1 – e_2)$. Toutes ces tensions composées sont décalées les unes par rapport aux autres de 60°, de sorte que la période de la tension du réseau se décompose donc en six zones de 60° (période T/6) délimitées par les instants de passage à zéro de ces six tensions composées. A chacune de ces zones correspond une période de conduction d'un couple déterminé de thyristors du pont. La variation de la tension moyenne délivrée par le pont peut alors être réglée en faisant varier l'angle de déphasage $\Phi$ par rapport aux points de butée redresseur.

La commande d'allumage des thyristors du pont peut donc être réalisée à partir de la détermination des paramètres suivants:

– les instants de passage à zéro des tensions composées du réseau,
– le sens de rotation des tensions de phase $e_1$, $e_2$, $e_3$ du réseau RST qui permet de définir l'ordre séquentiel des périodes de conduction des thyristors, et
– l'angle de déphasage $\Phi$.

Dans ce type d'application, l'invention a plus particulièrement pour but l'élaboration d'un signal de synchronisation qui permette, avec un coût minimum, d'assurer l'ordonnancement de la commande des thyristors du pont par un processus numerique.

Comme précédemment mentionné, la première étape du procédé permettant d'élaborer ce signal de synchronisation est une étape d'initialisation au cours de laquelle on mesure et/ou on vérifie la valeur de la période T du réseau.

Cette mesure de la période T peut être avantageusement réalisée par un microprocesseur 1, par l'intermédiaire d'un circuit 2 détectant les passages à zéro par front montant de l'une des tensions de phase, $e_1$, $e_2$, $e_3$ du réseau RST. Dans ce cas, lors d'un passage à zéro par front montant de la tension de phase considérée, le microprocesseur 1 entame un comptage de temps qui se termine par le passage à zéro suivant, par front montant de la tension de phase. Le niveau de ce compteur qui correspond à la période T du secteur peut être ensuite mis en mémoire et être éventuellement comparé à la période théorique du réseau. Dans le cas d'une non concordance importante, une signalisation peut être déclenchée. Bien entendu, cette phase de détermination de la période du réseau peut être répétée plusieurs fois pour vérification.

L'étape d'initialisation suivante consiste en la détermination du sens de rotation des tensions de phase du réseau, c'est-à-dire l'ordre dans lequel ces tensions de phase se succèdent.

Cette détermination peut être effectuée au moyen du circuit 2 en détectant, à la fin de la mesure de période précédente, lorsque la tension de phase dont on mesure la période repasse à zéro par front montant, le signe à cet instant des autres tensions de phase. A partir de ces informations de signe, une simple table de vérité permet de déterminer le sens de rotation des phases $e_1$, $e_2$, $e_3$, ce qui permet au microprocesseur 1, à l'aide d'un processus incrémental simple, d'évaluer, compte tenu de la période T précédemment déterminée et dudit sens de rotation, les instants de passage à zéro théoriques et le sens, montant ou descendant de ces passages à zéro, des différentes tensions composées du secteur.

Une fois cette étape d'initialisation accomplie, on peut passer à l'étape de fonctionnement du procédé.

L'élaboration du signal de synchronisation au cours de cette phase implique l'utilisation d'un circuit du type de celui contenu dans le bloc en trait interrompu 3 de la figure 1.

Ce circuit fait tout d'abord intervenir un multiplexeur 4 comprenant au moins trois entrées parallèles 5, 6, 7 respectivement reliées au trois conducteurs de phase R,S,T du réseau. La commande de ce multiplexeur 4 est assurée par le microprocesseur qui délivre deux bits de commande sur deux entrées de commande respectives 8, 9 qui déterminent, en fonction de la période de passage à zéro, des tensions composées du secteur et du sens de rotation de ces tensions, laquelle des tensions de phase $e_1$, $e_2$, $e_3$ du secteur doit être appliquée à la sortie (série) 10 du multiplexeur 4.

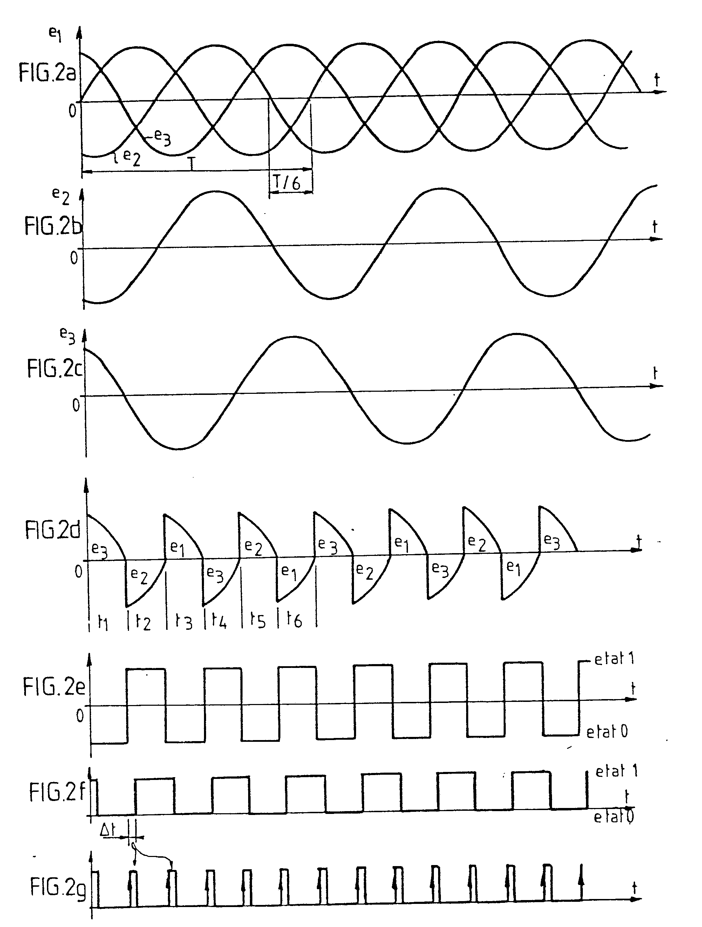

A titre illustratif, les figures 2a à 2c représentent les trois sinusoïdes te tensions respectives des trois phases du réseau RST. Ces trois phases du réseau sont déphasées les unes par rapport aux autres de 60°C. Sur la figure 2a, on a également superposé les sinusoïdes te tension $e_2$ et $e_3$ (respectivement des phases S et T) à la sinusoïde de tension $e_1$ de la phase R du réseau, de manière à faire apparaître les instants de passage à zéro ($t_1$ à $t_6$) de ces courbes et les zones de période T/6 entre ces instants.

Il convient de noter que sur les figures 2a à 2c, on n'a pas représenté les six tensions composées du réseau. En réalité, seules de ces six tensions, trois sont significatives, les trois autres se déduisant par symétrie par rapport à l'axe du temps.

La figure 2d représente la forme du signal obtenu à la sortie du multiplexeur 4 qui consiste sur une période T:

– entre l'instant 0 et l'instant $t_1$, en la portion de sinusoïde (T/6) correspondante de la tension $e_3$;

– entre l'instant $t_1$ et l'instant $t_2$, en la portion de sinusoïde (T/6) correspondante de la tension $e_2$;

– entre l'instant $t_2$ et l'instant $t_3$, en la portion de sinusoïde (T/6) correspondante de la tension $e_1$;

– entre l'instant $t_3$ et l'instant $t_4$, en la portion de sinusoïde (T/6) correspondante de la tension $(e_3)$;

– entre l'instant $t_4$ et l'instant $t_5$, en la portion de sinusoïde (T/6) correspondante de la tension $(e_2)$, et

– entre l'instant $t_5$ et l'instant $t_6$, en la portion de sinusoïde (T/6) correspondante de la tension $(e_1)$.

Le signal produit par le multiplexeur 4 est ensuite transmis à un comparateur à hystérésis 12 conçu pour basculer seulement lorsque la phase aiguillée par le multiplexeur 4 change de signe et dépasse un seuil déterminé. Ce comparateur 12 agit à la façon d'un conformateur permettant de transformer le signal fourni par le multiplexeur 4 en un signal en créneaux (figure 2e) comprenant une succession de créneaux positifs (état 1) et de créneaux négatifs (état 0).

Du fait qu'il ne bascule que pour des changements de signe des tensions de phase du réseau et, au-delà dudit seuil, ce comparateur 12 permet une première élimination des perturbations du réseau, telles que, par exemple, des trous de commutation.

Le signal en créneaux fourni par le comparateur 12 est ensuite transmis à l'une des deux entrées 13 d'un circuit logique 14 de type «OU EXCLUSIF», dont l'autre entrée 15 reçoit un signal logique (figure 2f) élaboré par le microprocesseur 1 en fonction des temps de passage à zéro des tensions de phase du secteur et de leur sens de rotation.

Ce signal consiste en une succession de créneaux positifs correspondant normalement en période et en durée aux créneaux négatifs du signal délivré par le comparateur 12, mais légèrement déphasés par rapport à ceux-ci.

Le fonctionnement de ce circuit logique est alors le suivant:

Dans le temps précédent l'instant $t_1$, l'entrée 13 du circuit 14 qui reçoit un signal négatif (demi alternance négative du signal de la figure 2e) est à l'état 0, tandis que le signal appliqué par le microprocesseur sur l'entrée 15 est à l'état 0. La sortie 16 du circuit 14 va donc se trouver à l'état 0, et à l'instant $t_1$ va basculer à l'état 1, en créant un front montant, par suite du passage de l'entrée 13 à l'état 1. La sortie du circuit se maintient à 1 jusqu'à ce que le signal appliqué par le microprocesseur passe à l'état 1. On obtient donc à la sortie du circuit une période d'interruption $\Delta t$.

La sortie 16 du circuit 14 est alors à l'état 0 jusqu'à l'instant $t_2$ où le signal fourni par le comparateur 12 retourne à l'état 0, ce qui a pour effet de faire à nouveau basculer à 1 par un front montant la sortie 16 du circuit 14. La sortie 16 du circuit 14 repassera ensuite à l'état 0, après une nouvelle interruption $\Delta t$, dès le retour à l'état 0 du signal produit par le microprocesseur.

Ce cycle de fonctionnement se poursuit, de sorte que l'on obtient, à la sortie du circuit logique (14), un signal crénelé dont les fronts montants sont en synchronisme des passages à zéro des tensions composées du secteur.

Ce signal est ensuite transmis à l'une des deux entrées d'un circuit logique de type NON ET 17 destiné à assurer la validation des fronts montants du signal fourni par le circuit logique 14. La deuxième entrée de ce circuit NON ET reçoit du microprocesseur un signal de verroilllage.

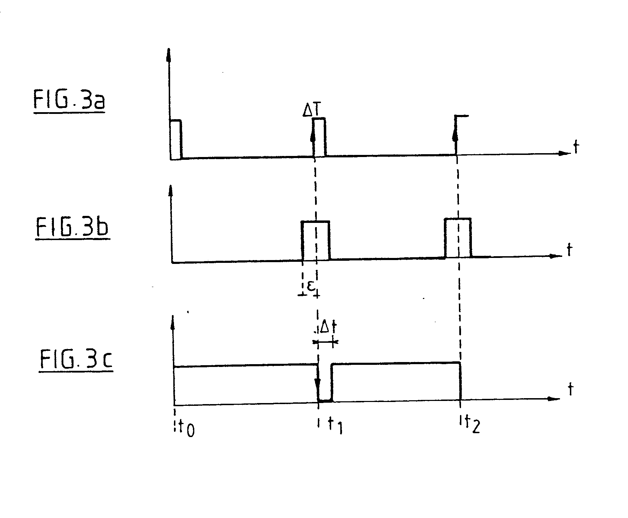

Les figures 3a à 3c permettent d'illustrer le fonctionnement de ce circuit.

On notera tout d'abord que la figure 3a correspond à la figure 2g précédemment décrite, mais dans laquelle, pour faciliter la compréhension, on a élargi les créneaux.

La figure 3b représente le signal appliqué par le microprocesseur sur l'entrée du circuit NON ET. Ce signal comprend une succession de créneaux de période T/6 et s'étendant de part et d'autre des instants $t_1$, $t_2$ ..., c'est-à-dire des instants où les tensions composées du réseau passent par 0. Ce signal peut être donc facilement élaboré à partir des paramètres déterminés lors de la phase d'initialisation.

On constate que ce signal permet d'effectuer un masquage du signal transmis par le circuit pendant des durées T/6 – ε, de sorte que pendant ce masquage, les perturbations qui pourraient intervenir en amont du circuit 17 se trouvent ainsi inhibées. Par contre, à l'approche des temps $t_1$, $t_2$ ..., ce signal passe à l'état logique 1 et autorise donc un changement d'état du circuit logique NON ET. Lorsqu'intervient aux instants $t_1$, $t_2$ ensuite le front montant des créneaux du signal produit par le circuit logique 14, le circuit logique NON ET 17 repasse à l'état logique 0 en créant ainsi un front descendant exploitable par le microprocesseur 1 pour assurer sa synchronisation.

Bien entendu, ce résultat pourrait être obtenu par un circuit logique inverse, en inversant les états du signal produit par le comparateur et des signaux fournis par le microprocesseur.

Le signal délivré par le circuit NON ET 17 peut être utilisé dans de nombreuses applications.

Ainsi, par exemple, dans le cas du variateur de vitesse précédemment décrit, il peut à la fois servir à assurer la synchronisation et l'ordonnancement des thyristors $V_1$ à $V_6$ du pont et à la détermination, par intégration synchrone, de la valeur moyenne du courant délivré à la sortie du pont.

**Revendications**

1. Procédé pour l'élaboration, à partir du courant alternatif d'un réseau polyphasé, d'un signal de synchronisation utilisable pour ordonner en synchronisme avec ledit courant, le séquencement d'opérations effectuées par un système numérique, comprenant:

A – une phase d'initialisation comportant:

– la mesure et/ou la vérification de la période (T) du réseau, par au moins un comptage du temps entre deux passages à zéro, avec un même front, d'une première tension de phase (e₁, e₂ ou e₃) du réseau (RST),

- la détermination du sens de rotation des tensions de phase (e₁, e₂, e₃) du réseau (RST) d'après les signes des autres tensions de phase du réseau, au moment d'un passage à zéro déterminé de la première tension de phase du réseau,
- l'élaboration d'un processus incrémental permettant d'évaluer, en fonction de ladite période (T) et dudit sens de rotation, les instants de passage à zéro théoriques et le sens des fronts montants et descendants des différentes tensions de phase du réseau (RST), lors de ces passages à zéro théoriques, et

B – une phase de fonctionnement comportant:

- le multiplexage (4) des tensions de phase du réseau suivant le sens de rotation des phases déterminé au cours de la phase d'évaluation, au rythme des instants de passage à zéro théoriques évalués par ledit processus incrémental, de manière à obtenir une tension formée par des portions successives des tensions de phase du réseau (RST), l'aiguillage d'un arc de sinusoïde d'une tension de phase étant consécutif au passage à zéro théorique de l'arc de sinusoïde de la tension de phase précédente (figure 2d),
- la conformation du signal produit par le multiplexage en un premier signal d'ondes carrées dont les fronts indiquent les instants de passage à zéro des tensions de phase du réseau (figure 2e),
- la comparaison logique de ce premier signal d'ondes carrées avec un signal d'ondes carrées théorique (figure 2f) obtenu à partir des paramètres mesurés lors de la phase d'initialisation dont les fronts correspondent à des instants légèrement décalés par rapport aux instants théoriques de passage à zéro des tensions de phase du réseau, cette comparaison permettant d'élaborer un premier signal crénelé (figure 2 g),
- la comparaison logique de ce premier signal crénelé (figure 2g) à un signal de fenêtre (figure 3b) de largeur prédéterminée pendant lequel les phases devraient théoriquement passer à zéro, et l'obtention, grâce au résultat de cette comparaison logique, d'un second signal crénelé (figure 3c).
- l'élaboration du signal de synchronisation par détection des fronts dudit deuxième signal crénelé.

2. Procédé selon la revendication 1, caractérisé en ce que l'élaboration du deuxième signal crénelé (figure 3c) est effectuée par inversion du premier signal crénelé (figure 2g), et en ce que le signal de synchronisation est obtenu par détection des fronts montants dudit deuxième signal crénelé (figure 3c).

3. Procédé selon l'une des revendications 1 et 2, caractérisé en ce que la susdite conformation du signal produit par le multiplexage est obtenue au moyen d'une bascule à hystérésis qui ne change d'état que lorsque la tension de phase aiguillée par le multiplexeur change de signe.

4. Procédé selon l'une des revendications précédentes, caractérisé en ce qu'il comprend une phase d'habilitation des fronts du deuxième signal crénelé (figure 3c) qui sont utilisés pour produire le susdit signal de synchronisation, cette phase d'habilitation étant effectuée par ouverture d'une porte au voisinage des instants de passage à zéro des tensions de phase du réseau, déterminés par le susdit processus incrémental.

5. Dispositif pour la mise en œuvre du procédé selon l'une des revendications 1 et 2, caractérisé en ce qu'il comprend:

- un processeur (1) comprenant des moyens de comptage permettant de mesurer et de mettre en mémoire le temps entre deux passages à zéro d'une tension de phase (e₁, e₂ ou e₃) du réseau (RST), des moyens pour déterminer, à l'aide d'une table de vérité, le sens de rotation des tensions de phase (e₁, e₂, e₃) du réseau (RST) à l'instant du passage à zéro de l'une des tensions de phase, d'après le signe des autres tensions de phase du réseau, des moyens permettant par un processus incrémental, d'évaluer en fonction de ladite période et dudit sens de rotation, les instants de passage à zéro, et le sens des fronts montants et descendants des différentes tensions de phase du réseau, lors de ces passages à zéro,
- un circuit (2) relié aux conducteurs de phase du réseau (RST) et permettant de fournir au processeur (1) un signal numérique représentatif du passage à zéro de l'une des tensions de phase ainsi qu'un signal numérique représentatif du signe de ces tensions de phase,
- un multiplexeur (4) comprenant au moins trois entrées parallèles (5, 6, 7) respectivement reliées aux trois conducteurs de phase du réseau (RST), au moins deux bornes de commande (8, 9) recevant un signal numérique élaboré par le processeur (1) en fonction des instants de passage à zéro et du sens de rotation des tensions de phase déterminé par ledit processeur (1), et une sortie (10) délivrant une tension formée par des portions successives des tensions de phase composées du réseau (RST), l'aiguillage d'un arc de sinusoïde d'une tension de phase étant consécutif au passage à zéro théorique, évalué par le processeur (1), de l'arc de sinusoïde de la tension de phase précédente,
- une bascule (12) reliée à la sortie (10) du multiplexeur (4), cette bascule (12) ne passant de l'état 1 à l'état 0 que lorsque la tension de phase aiguillée par le multiplexeur (4) change de signe,
- un circuit logique de type «OU EXCLUSIF» (14) connecté par l'une de ses entrées (13) à la sortie de la bascule (12) et par son autre entrée (15) à une sortie du processeur (1) délivrant une succession de créneaux positifs élaborés en fonction des paramètres mesurés lors de la phase d'initialisation et présentant des fronts légèrement décalés par rapport aux moments théoriques de passage à zéro des tensions de phase du réseau, et
- un circuit logique de type «NON ET» (17) dont une entrée (18) est connectée à la sortie (16) du circuit logique de type «OU EXCLUSIF» (14) et dont l'autre entrée (19) reçoit un signal élaboré par le processeur (1) en fonction des paramètres mesurés pendant la phase d'initialisation et formé d'une succession de créneaux constituant des fenêtres de validation et émis au voisinage des instants théoriques ($t_1$, $t_2$, ...$t_n$) de passage à zéro des tensions de phase du réseau (RST).

**Patentansprüche**

1. Verfahren zur Bestimmung, aus dem Wechselstrom eines Mehrphasenstromnetzes, eines Synchronisationssignals, das zur sequentiellen Ordnung der von einem Digitalsystem ausgeführten Operation in Synchronismus mit besagtem Strom dient, mit:
A. einer Initialisierungsphase welche umfasst:
– die Messung und/oder Prüfung der Netzperiode (T), durch mindestens eine Zählung der zwischen zwei Nullpassagen mit gleicher Front einer ersten Phasenspannung ($e_1$, $e_2$ oder $e_3$) des Stromnetzes (RST) vergangenen Zeit,
– die Bestimmung der Drehrichtung der Phasenspannungen ($e_1$, $e_2$, $e_3$) des Stromnetzes (RST) gemäss den Zeichen der anderen Phasenspannungen des Stromnetzes, im Moment einer bestimmten Nullpassage der ersten Phasenspannung des Stromnetzes,
– die Ausarbeitung eines Inkrementverfahrens, welches es ermöglicht, in Abhängigkeit von besagter Periode (T) und besagter Drehrichtung, die theoretischen Nullpassagemomente und die Richtung der steigenden und fallenden Fronten der verschiedenen Phasenspannungen des Stromnetzes (RST) während dieser theoretischen Nullpassagen abzuschätzen und
B. einer Betriebsphase, welche umfasst:

– das Multiplexing (4) der Phasenspannungen des Stromnetzes, je nach der Phasendrehrichtung, die im Laufe der Abschätzungsphase im Rhythmus der von besagtem Inkrementverfahren abgeschätzten theoretischen Nullpassagemomente bestimmt wurde, um eine Spannung zu erhalten, die aus aufeinanderfolgenden Spannungsabschnitten des Stromnetzes (RST) gebildet wird, wobei die Zuleitung eines sinusförmigen Bogens einer Spannungsphase nach der theoretischen Nullpassage des sinusförmigen Bogens der vorhergehenden Phasenspannung erfolgt (Figure 2d),
– die Formung des durch Multiplexing gebildetes Signals in ein erstes Rechteckwellensignal, dessen Fronten die Nullpassagemomente der Phasenspannungen des Stromnetzes anzeigen (Figur 2e),
– den logischen Vergleich dieses ersten Rechteckwellensignals mit einem theoretischen Rechteckwellensignal (Figur 2f), erhalten aus den während der Initialisierungsphase gemessenen Kennwerten, dessen Fronten Momenten entsprechen, die im Verhältnis zu den theoretischen Nullpassagemomenten der Phasenspannungen des Stromnetzes ein wenig verschoben sind, wobei dieser Vergleich die Ausarbeitung eines ersten Rechtecksignals ermöglicht (Figur 2g),
– den logischen Vergleich dieses ersten Rechteckwellensignals (Figur 2g) mit einem Fenstersignal (Figure 3b) vorbestimmter Breite (E), währenddessen theoretisch die Nullpassage der Phasen stattfindet und die Erhaltung, dank des Ergebnisses dieses logischen Vergleiches, eines zweiten Rechtecksignals (Figure 3c),
– die Ausarbeitung des Synchronisationssignals durch Erfassung der Fronten des besagten zweiten Rechtecksignals.

2. Verfahren nach Anspruch 1, dadurch gekennzeichnet, dass die Ausarbeitung des zweiten Rechtecksignals (Figure 3c) durch Umkehrung des ersten Rechtecksignals (Figure 2g) erfolgt und dass man das Synchronisationssignal durch Erfassung der steigenden Fronten des besagten zweiten Rechtecksignals erhält (Figur 3c).

3. Verfahren nach einem der Ansprüche 1 und 2, dadurch gekennzeichnet, dass man besagte, durch Multiplexing erreichte, Formung des Signals mittels einer Hysteresekippschaltung erhält, die nur ihren Zustand ändert, wenn die vom Multiplexer zugeleitete Phasenspannung das Zeichen ändert.

4. Verfahren nach einem der vorhergehenden Ansprüche, dadurch gekennzeichnet, dass es eine Phase der Gültigmachung der Fronten des zweiten Rechtecksignals umfasst (Figur 3c) welche benutzt werden, um besagtes Synchronisationssignal zu formen, wobei besagte Phase der Gültigmachung durch Öffnung eines Tors in der Nähe der Nullpassagemomente der Phasenspannungen des Stromnetzes, die durch besagtes Inkrementverfahren bestimmt wurden, stattfindet.

5. Vorrichtung zur Ausführung des Verfahrens nach einem der Ansprüche 1 und 2, dadurch gekennzeichnet, dass sie umfasst:

– einen Prozessor (1) mit Zählmitteln, welche es ermöglichen, die Zeit zwischen zwei Nullpassagen einer Phasenspannung ($e_1$, $e_2$ oder $e_3$) des Stromnetzes (RST) zu messen und zu speichern, Mittel, um mit Hilfe einer Wahrheitstafel, die Drehrichtung der Phasenspannungen ($e_1$, $e_2$, $e_3$) des Stromnetzes (RST) zu bestimmen, im Augenblick der Nullpassage einer der Phasenspannungen, je nach dem Zeichen der anderen Phasenspannungen des Stromnetzes, Mittel, die es ermöglichen, mit Hilfe eines Inkrementverfahrens und in Abhängigkeit von besagter Periode und besagter Drehrichtung, die Nullpassagemomente und die Richtung der steigenden und fallenden Fronten der verschiedenen Phasenspannungen des Stromnetzes bei diesen Nullpassagen abzuschätzen.
– einen Kreis (2), der an die Phasenleiter des Stromnetzes (RST) angeschlossen ist und dem Prozessor (1) ein Digitalsignal mitteilt, welches repräsentativ ist für die Nullpassage einer der Phasenspannungen, sowie ein Digitalsignal, welches repräsentativ ist für das Zeichen dieser Phasenspannungen,

– einen Multiplexer (4) mit mindestens drei parallelen Eingaben (5, 6, 7), die jeweils an die drei Phasenleiter des Stromnetzes (RST) angeschlossen sind, mindestens zwei Steuerklemmen (8, 9), welche ein Digitalsignal erhalten, das vom Prozessor (1) abhängig von den Nullpassagemomenten und der von besagtem Prozessor bestimmten Drehrichtung der Phasenspannungen ausgearbeitet wurde, und einer Ausgabe (10), welche eine Spannung ausgibt, die aus aufeinanderfolgenden Abschnitten der zusammengesetzten Phasenspannungen des Stromnetzes (RST) gebildet ist, wobei die Zuleitung eines sinusförmigen Bogens einer Phasenspannung der theoretischen Nullpassage des sinusförmigen Bogens der vorhergehenden Phasenspannung folgt, die vom Prozessor (1) abgeschätzt wird,

– eine Kippschaltung (12), welche an die Ausgabe (10) des Multiplexers (4) angeschlossen ist, wobei diese Kippschaltung (12) erst dann vom Zustand 1 in den Zustand 0 übergeht, wenn die vom Multiplexer (4) zugeleitete Phasenspannung das Zeichen ändert, einen logischen Kreis des exklusiven ODER Typs (14), welcher durch eine seiner Eingaben (13) an den Ausgang der Kippschaltung (12) angeschlossen ist und durch seine andere Eingabe (15) an eine Ausgabe des Prozessors (1), welche eine Reihe von positiven Rechteckwellen ausgibt, die, in Abhängigkeit von den anlässlich der Initialisierungsphase gemessenen Kennwerten ausgearbeitet wurden und im Verhältnis zu den theoretischen Nullpassagemomenten der Phasenspannungen des Stromnetzes leicht verschobene Fronten aufweist, und

– einen logischen Kreis des NICHT-UND Typs (17), dessen eine Eingabe (18) an die Ausgabe (16) des logischen Kreises des exklusiven ODER Typs (14) angeschlossen ist und dessen andere Eingabe (19) ein Signal erhält, welches vom Prozessor (1) in Abhängigkeit von den während der Initialisierungsphase gemessenen Werten ausgearbeitet wurde und aus einer Reihe von Rechteckwellen geformt ist, welche Gültigmachungsfenster bilden und in der Nähe der theoretischen Nullpassagemomente $(t_1, t_2 \ldots t_n)$ der Phasenspannungen des Stromnetzes (RST) abgegeben werden.

## Claims

1. A process for elaborating, from the alternating current of a multiphase network, a synchronization signal usable for ordering in synchronism with said current, the sequencing of operations effected by a digital system comprising:
A – an initialization phase comprising:

– the measurement and/or checking of the period (T) of the network, by at least one count of the time between two zero cross overs with the same front of a first phase voltage ($e_1$, $e_2$ or $e_3$) of the network (RST),
– determination of the direction of rotation of the phase voltages ($e_1$, $e_2$, $e_3$) of the network (RST) according to the signs of the other phase voltages of the network, at a given zero cross over time of the first phase voltage of the network,
– elaboration of an incremental procedure for evaluating, as a function of said period (T) and said direction of rotation, the theoretical zero cross over times and the direction of the rising and falling fronts of the different phase voltages of the network (RST), during these theoretical zero cross overs, and
B – an operating phase comprising:

– the multiplexing (4) of the phase voltages of the network depending on the direction of rotation of the phases determined during the evaluating phase at the timing of the theoretical zero cross over times, evaluated by said incremental procedure, so as to obtain a voltage formed by successive portions of the phase voltages of the network (RST), the switching of a sinusoid arc of a phase voltage being consecutive to the theoretical zero cross over of the sinusoid arc of the preceding phase voltage (Figure 2d).
– shaping of the signal produced by the multiplexing into a first square wave signal the fronts of which indicate the zero cross over times of the phase voltages of the network (Figure 2e).,
– logical comparison of said first square wave signal with a theoretical square wave signal (Figure 2f) obtained from parameters measured during the initialization phase the fronts of which correspond to times slightly phase shifted with respect to theoretical zero cross over times of phase voltages of the network, said comparison allowing the elaboration of a first square wave signal (Figure 2g),
– logical comparison of said first square wave signal (Figure 2g) with a window signal (Figure 3b) of a given width (E) in the course of which the phases should theoretically pass over to zero and formation, as a function of the result of said logical comparison, of a second square wave signal (Figure 3c),
– elaboration of the synchronization signal by detection of the fronts of said second square wave signal.

2. The process as claimed in claim 1, characterized in that said second square wave signal (Figure 3c) is obtained by inverting the first square wave signal (Figure 2g) and in that the synchronization signal is obtained by detecting the rising fronts of said second square wave signal (Figure 3c).

3. The process as claimed in one of claims 1 and 2, characterized in that said shaping of the signal produced by multiplexing is obtained by means of a hysteresis flip-flop which only switches over when the phase voltage switched by the multiplexer changes sign.

4. The process as claimed in one of the preceding claims, characterized in that it comprises a phase for enabling the fronts of said second square wave signal (Figure 3c) which are used for producing said synchronization signal, this enabling phase being obtained by opening à gate in the vicinity of the zero cross over times of the phase voltages of the network, determined by said incremental procedure.

5. A device for implementing the process as claimed in one of claims 1 or 2, characterized in that it comprises:

- a processor (1) having counting means for measuring and storing the time between two cross overs of a phase voltage ($e_1$, $e_2$ or $e_3$) of the network (RST), means for determining, from a table of truth, the direction of rotation of the phase voltages ($e_1$,$e_2$,$e_3$) of the network (RST) at the time of zero cross over one of the phase voltages, according to the sign of the other phase voltages of the network, means for evaluating, by an incremental procedure and as a function of said period and said direction, the zero cross over times and the direction of the rising and falling fronts of the different phase voltages of the network during the zero cross over times.

- a circuit (2) connected to the phase conductors of the network (RST) for supplying to the processor (1) a digital signal representative of the zero cross over of one of the phase voltages as well as a digital signal representative of the sign of these phase voltages.

- a multiplexer (4) comprising at least three parallel inputs (5, 6, 7) connected respectively to the three phase conductors of the network (RST), at least two control terminals (8, 9) receiving a digital signal elaborated by the processor (1) as a function of the zero cross over times and of the direction of rotation of the phase voltages determined by said processor (1), and an output (10) delivering a voltage formed by successive portions of the compound phase voltages of the network (RST), switching of a sinusoid arc of a phase voltage being consecutive to the theoretical zero cross over evaluated by the processor (1) of the sinusoid arc of the preceding phase voltage,

- a flip-flop (12) connected to the output (10) of the multiplexer (4), this flip-flop (12) only going over from level 1 to level 0 when this phase voltage switched by the multiplexer (4) changes sign,

- a logic circuit of the EXCLUSIVE OR type (14) connected by one of its inputs (13) to the output of the flip-flop (12) and by its other input (15) to an output of the processor (1) delivering a succession of positive square waves elaborated as a function of the parameters measured during the initialization phase and having fronts slightly phase shifted with respect to the theoretical zero cross over times of the phase voltages of the network, and

- a logic circuit (17) of the NAND type, one input (18) of which is connected to the output (16) of the logic EXCLUSIVE OR type circuit (14) and the other input (19) of which received a signal elaborated by the processor (1) as a function of the parameters measured during the initialization phase and formed from a succession of square waves forming enabling windows and emitted in the vicinity of the theoretical zero cross over times ($t_1$, $t_2$...$t_n$) of the phase voltages of said network (RST).

FIG.1

FIG.2a

FIG.2b

FIG.2c

FIG.2d

FIG.2e

FIG.2f

FIG.2g

FIG.3a

$\Delta T$

t

FIG.3b

t

$\varepsilon$

FIG.3c

$\Delta t$

t

$t_0$         $t_1$         $t_2$